# EUROPÄISCHE PATENTSCHRIFT

(11) **EP 0 586 907 B1**
(45) Veröffentlichungstag und Bekanntmachung des Hinweises auf die Patenterteilung: **22.01.1997**
(21) Anmeldenummer: 93112784.9
(22) Anmeldetag: 10.08.1993
(51) Int. Cl.: B41F 33/00, G06F 9/44

(54) **Rechner für den Leitstand einer Maschine, insbesondere einer Druckmaschine**
Computer for controlling a machine, especially a printing press
Ordinateur pour le contrôle d'une machine, notamment d'une presse d'impression

(30) Priorität: 02.09.1992 DE 4229266
(43) Veröffentlichungstag der Anmeldung: 16.03.1994
(73) Patentinhaber: MAN Roland Druckmaschinen AG, 63075 Offenbach (DE)
(72) Erfinder: Duschl, Dieter, Dr., D-63071 Offenbach (DE); Ruppertz, Michael, D-65812 Bad Soden/Taunus (DE)
(74) Vertreter: Marek, Joachim, Dipl.-Ing.

(56) Entgegenhaltungen:
- EP-A- 0 419 004
- DE-A- 4 123 126
- US-A- 5 093 915
- IBM TECHNICAL DISCLOSURE BULLETIN Bd. 31, Nr. 1 , Juni 1988 , ARMONK, NY, USA Seiten 352 - 354 XP000049709 'CONFIGURABLE BOOT DEVICE AND DRIVE REMAPPING FOR PERSONAL COMPUTERS'
- IBM TECHNICAL DISCLOSURE BULLETIN Bd. 10, Nr. 8 , Januar 1968 , ARMONK, NY, USA Seiten 1098 - 1100 'DATA PROCESSING UNIT'
- Design und Elektronik, Ausgabe 12, 9.6.1987; Seiten 40 - 42, "Datensicherung und Back-up-Techniken bei Entwicklungssystemen"

## Beschreibung

Die Erfindung betrifft einen Rechner für den Leitstand einer Maschine, insbesondere einer Druckmaschine, gemäß dem Oberbegriff von Anspruch 1.

Der Druckprozeß wird heute zunehmend von Leitständen aus gesteuert und überwacht. Von einem solchen Leitstand aus können die verschiedensten Komponenten sowie Stellglieder in ihrem Ist-Zustand überwacht und entsprechend den Prozeßbedürfnissen verstellt werden. In einem Leitstand einer Druckmaschine sollen aber nicht nur Steuer- und Prozeßdaten eben dieser einen Druckmaschine bearbeitbar sein, sondern gemäß einem CIM-Konzept in der Druckindustrie soll der Leitstand auch ein Teil eines Netzwerkes des gesamten Produktionsprozesses von der Druckvorstufe bis zur Endverarbeitung sein (Deutscher Drucker, "Neue Leitstandtechnik im Zeitungsdruck", Seite w 140, Nr. 30, 1987 und "Die intelligente Druckmaschine - demonstriert am Beispiel einer Leitstandtechnik für die Zukunft", Seite w 2, Nr. 11, 1991). Die DE 3 829 341 A1 beschreibt ein Druckereisteuerungssystem unter Einsatz der Leitstandtechnik mit einer Informationsvernetzung innerhalb einer Druckerei.

Ein Leitstand für eine Druckmaschine weist für den Bediener eine Dateneingabevorrichtung (Tastatur) sowie eine Datenanzeigeeinrichtung (Bildschirm) auf, wobei diese Einheiten einem Farbabstimmpult zugeordnet sein können. Hauptbestandteil eines derartigen Leitstandes ist ein Rechner nach Art eines Personal-Computers (PC), wobei dieser insbesondere als Industrie-PC ausgeführt ist.

Ein Leitstand-PC ist über verschiedene Schnittstellen und Bus-Systeme sowohl mit den einzelnen Komponenten einer oder mehrerer Druckmaschinen als auch mit anderen Rechnern nach Art eines Netzwerkes verbunden. Die Bedienperson der Druckmaschine kann über den Bildschirm des Leitstands den Prozeß überwachen und über die Tastatur das Ansteuern der verschiedensten Stellmittel bewirken. Das Überwachen und Steuern des Druckprozesses geschieht dabei in vorteilhafterweise durch Einbindung in eine sogenannte menügeführte Benutzeroberfläche. Die verschiedensten Programmteile für das Steuern und Anzeigen sowie für die Menüführung sind dabei auf der Festplatte des PC's gespeichert und werden bei Bedarf von der Festplatte in das RAM des PC's geladen. Die Festplatte des Leitstand-PC's dient aber auch als Speichermedium für während der Produktion anfallende Meß- und Maschinendaten. Diese sind dann bei Wiederholaufträgen aufrufbar und erleichtern bzw. verkürzen entsprechende Voreinstellarbeiten. Neben einem Festplattenlaufwerk weist ein PC eines Leitstandes, wie die Rechner im Büro und Entwicklungsbereich ebenfalls, zusätzlich auch wenigstens ein Diskettenlaufwerk auf, so daß Daten und Programme auf den Rechner zu übertragen bzw. eben auf diesen Datenträger abzuspeichern sind.

Bei den zum Teil sehr rauhen Betriebsbedingungen ausgesetzten Festplattenlaufwerken von Industrie-PC's treten nicht selten Ausfälle auf, so daß Zugriffe auf dieses Laufwerk nicht mehr möglich sind. Da in der Regel derartige Festplattenabstürze erst bei einem Zugriff auf das Laufwerk festgestellt werden, ist ein Weiterarbeiten im eigentlichen Programm oft nicht mehr möglich. Gleiches gilt für den Betrieb der vom Rechner gesteuerten Maschine.

Bei Störungen der obengenannten Art ist also der Einsatz eines hochqualifizierten Servicetechnikers unumgänglich, da das Festplattenlaufwerk gewechselt werden muß. Je nach Art des Ausfalles können auch die auf dieser Festplatte enthaltenen Daten vollständig oder teilweise verloren sein. Ohne besondere Vorkehrungen hinsichtlich der Datensicherung stehen einem solchen Rechner nach Einbau eines neuen Laufwerkes (mit den entsprechenden Programmteilen für die menügeführte Benutzeroberfläche) keine Daten, insbesondere von vorausgegangenen Aufträgen, zur Verfügung.

Allgemein bekannt ist das Prinzip, in bestimmten Zeitabständen Sicherungskopien von der Festplatte auf Disketten herzustellen (Backups), wobei wegen der hohen Speicherkapazität einer Festplatte jedoch sehr viele Disketten benutzt werden müssen. Ein derartiges Vorgehen ist einem mehr oder weniger versierten PC-Benutzer im Büro oder Labor vielleicht noch zuzumuten. Dem Benutzer eines Maschinen-Leitstands, insbesondere einem Drucker, ist dies wegen der damit verbundenen Ablenkung von seinem eigentlichen Tätigkeitsfeld aber nicht möglich. Trotz der eventuell derartig hergestellten Sicherungskopien wäre ein Leitstand-PC nach einem Festplattenausfall ohnehin nicht uneingeschränkt weiterzubetreiben.

Dem Datenverlust nach einem Festplattenausfall einerseits sowie dem unmittelbaren Weiterbetrieb des Rechners andererseits kann dadurch begegnet werden, wenn eben dieser Rechner mit zwei unabhängigen Festplatten betrieben wird und die Daten stets auf beide Festplatten geschrieben werden. Ein derartiger Spiegelplattenbetrieb ist aus der DE-Zeitschrift "Deckblatt", Ausgabe 10/Oktober 1988, Seite 108 ff bekannt. Durch die beiden vorhandenen Festplattenlaufwerke und der "gespiegelten" Datenaufzeichnung kann bei Ausfall eines Festplattenlaufwerkes sofort mit dem zweiten intakten weitergearbeitet werden und es ergibt sich ebenfalls kein Datenverlust. Aufwendig ist hier aber, daß bei Übertragung dieses vorbekannten Prinzips auf einen PC neben den Kosten für ein zweites Festplattenlaufwerk nicht unbeträchtliche Kosten für eine entsprechende Software entstehen, die eben ein solches System lauffähig machen, ohne daß sich im Normalbetrieb die zusätzlich nötigen Festplattenzugriffe negativ auf die Laufzeit eines eigentlichen Anwendungsprogrammes auswirken.

Datensicherung mittels Back-up-Techniken sowie ein Rechner mit zwei Festplattenlaufwerken, welche im Spiegelplattenbetrieb gefahren werden, sind insbesondere aus der DE-Publikation: Design und Elektronik, Ausgabe 12 vom 09.06.87; Seiten 40 - 42, 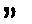 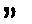 Datensicherung und Back-up-Techniken bei Entwicklungssystemen" bekannt.

Aus dem IBM Technical Disclosure Bulletin, Bd 31, No. 1, June 1988, ARMONK, NY, USA, Seiten 352 - 354, XP000049709, 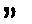 Configurable Boot Device and Drive Remapping for Personal Computers" ist ein Rechnersystem mit zwei insbesondere unterschiedliche Formate von Disketten lesenden Diskettenlaufwerken bekannt. Beschrieben wird eine Methode, vermittels dem Boot-Vorgänge von einem Diskettenlaufwerk A auf ein Diskettenlaufwerk B umsteuerbar sind.

Aufgabe der vorliegenden Erfindung ist es somit, einen Rechner gemäß dem Oberbegriff von Anspruch 1 derartig weiterzubilden, so daß der Kostenaufwand bei der Ausrüstung eines derartigen Rechners mit einem zweiten Festplattenlaufwerk minimiert und trotzdem eine komfortable sowie möglichst uneingeschränkte Weiterbenutzung des Rechners bei Ausfall eines Laufwerkes gewährleistet ist.

Gelöst wird diese Aufgabe durch die kennzeichnenden Merkmale von Anspruch 1. Vorteilhafte Ausgestaltungen der Erfindung ergeben sich aus den Unteransprüchen.

Nach der Erfindung ist vorgesehen, daß der Rechner zwei Festplattenlaufwerke, des weiteren mit C1 und C2 bezeichnet, aufweist. Im Urzustand, d.h. bei der Installation des Rechners, weisen beide Laufwerke C1 und C2 die gleichen Programm- und Datenteile zur Steuerung und Überwachung der Maschine auf. Insbesondere kann der Rechner sowohl vom Laufwerk C1 als auch vom Laufwerk C2 (nach entsprechender Umschaltung) gebootet werden. Im störungsfreien Normal betrieb erfolgen aber die entsprechenden Zugriffe auf die Festplatte nur unter Verwendung des Laufwerkes C1, d.h. das Laden einer Datei oder eines Programms vom Benutzerprogramm aus erfolgt ausschließlich durch Zugriffe auf das Laufwerk C1. Dementsprechend sind sämtliche Programmroutinen des eigentlichen Benutzerprogramms sowie des Betriebssystems (DOS) gestaltet (Konfiguration beim Booten).

Da der Rechner gemäß der Erfindung neben den beiden Festplattenlaufwerken C1 und C2 noch wenigstens ein Diskettenlaufwerk (Laufwerk A) aufweist, kann dieser entweder nach Einlegen einer entsprechenden Diskette vom Laufwerk A oder - Normal betrieb - vom Laufwerk C1 aus gebootet werden (Einschalten bei Schichtbeginn). Wie bereits erwähnt, arbeitet somit der Rechner im Normalbetrieb nur mit dem Laufwerk C1, d.h. lediglich auf der Festplatte dieses Laufwerkes werden neue Daten abgespeichert bzw. Daten aktualisiert. Dies sind bei Beginn eines neuen Druckauftrages z.B. die Kundennummer, die Farbreihenfolge in den Druckwerken, bestimmte Voreinstelldaten für die Farbführung, die Feuchtmittelführung, das Papierformat, Sollwerte für die Farbführung, vereinbarte Qualitätsmerkmale usw..

Gemäß der Erfindung ist vorgesehen, daß in unregelmäßigen oder regelmäßigen Zeitabständen entweder ausschließlich durch die Bedienperson oder aber durch das Programm veranlaßt, Sicherungskopien der Datenbestände der Festplatte im Laufwerk C1 auf die Festplatte im Laufwerk C2 erstellt werden. Im einfachsten Fall geschieht dies auf Veranlassung der Bedienperson über eine spezielle, über die Benutzeroberfläche des eigentlichen Programms aufzurufende Programmroutine. Der Benutzer kann beispielsweise durch das Hauptprogramm nach Fertigstellen eines Druckauftrages dazu aufgefordert werden, ein entsprechendes "Backup" einzuleiten, indem er vorteilhafterweise nur eine Taste zu drücken hat. Auch ist jedoch möglich, daß das Sichern der Daten von Laufwerk C1 auf das Laufwerk C2 ohne äußere Veranlassung durch das laufende Programm selbsttätig ausgelöst wird. Hier kann eine Automatik vorgesehen sein, welche solche Backups in bestimmten Zeitabständen oder jeweils nach Ende oder auch zu Beginn eines neuen Druckauftrages erstellt.

Für die Backups, welche von der Festplatte in Laufwerk C1 auf die Festplatte des Laufwerkes C2 erstellt werden, können bestimmte, die Kopierzeit minimierende Maßnahmen vorgesehen sein. Beispielsweise ist es möglich, ein sogenanntes "Differential-Backup" zu erstellen, welches komplett diejenigen Dateien von C1 nach C2 kopiert, welche seit dem letzten Backup verändert wurden. Eine Modifizierung dieser Version stellt ein sogenanntes "Incremental-Backup" dar, wobei hier eine Aktualisierung vorgenommen wird, d.h. es werden die seit dem letzten Backup geänderten Daten angehängt und nicht überschrieben. Selbstverständlich kann auch von Zeit zu Zeit ein Komplett-Backup oder ein sogenanntes "Image-Backup" erstellt werden, wobei hier sämtliche Daten und Programmroutinen des Laufwerkes C1 auf die Festplatte des Laufwerkes C2 übertragen werden. Eine derartige Sicherungskopie wird selbstverständlich nur dann möglich sein, wenn die dafür nötige Zeit beispielsweise bei Stillstand der Maschine (Schichtpausen o.ä.) gegeben ist.

Bei Ausfall des Haupt-Laufwerkes C1 ist nach der Erfindung vorgesehen, daß die Bedienperson lediglich den Rechner des Leitstandes auszuschalten, eine spezielle Diskette in das Laufwerk A einzulegen und sodann den Rechner des Leitstandes wieder einzuschalten also neu zu booten hat. Die erfindungsgemäß vorgesehene Diskette enthält dazu einen Programmcode, so daß beim Booten des Leitstandrechners von eben dieser Diskette aus - es sei daran erinnert, daß bei einem PC beim Booten zunächst immer ein Zugriff auf das Laufwerk A mit der entsprechenden Suche nach einem Boot-Sektor erfolgt - ein Umschalten der Festplattenlaufwerke C1 und C2 dahingehend erfolgt, so daß der Zugriff auf Festplattendaten über das Betriebssystem (Ändern der Konfiguration) nach Laufwerk C2 umgesteuert wird. Der Rechner des Leitstandes, der mit einer derartigen Diskette gebootet, daraufhin über den auf der Diskette befindlichen Programmcode "umkonfiguriert" und anschließend für einen "Warmstart" noch einmal gebootet (beispielsweise ausgelöst per Tastendruck nach entsprechender Anzeige am Bildschirm) wurde, kann somit mit sämtlichen Daten und Programmen der Festplatte des Laufwerkes C2 weiterbetrieben werden. Als einzige Einschränkung ergibt sich, daß der Datenbestand der Festplatte im Laufwerk C2 die Aktualität des letzten Backup's aufweist. Dieser durch häufiges Erstellen von Sicherungskopien aber recht klein zu haltende Nachteil wird dadurch wieder aufgewogen, daß nach einem Fehler im Festplattenlaufwerk C1 der Rechner nach einem kurzen Aus- und Wiedereinschalten wieder zur Verfügung steht. Durch die Einfachheit des beschriebenen Handlungsablaufs sind für das Umschalten von C1 auf C2 weder besondere Vorkenntnisse noch gar eine Fachkraft nötig. Der Drucker selbst kann dies durchführen.

Das defekte Festplattenlaufwerk C1 kann zu einem geeigneten Zeitpunkt von einem Serviceingenieur entnommen und beispielsweise vor Ort zu reparieren versucht oder gar durch ein neues Festplattenlaufwerk ersetzt werden. Daraufhin besitzt der Rechner unter C1 wieder ein intaktes Laufwerk, so daß der Umschaltvorgang wieder rückgängig gemacht werden kann. Dazu wird zweckmäßigerweise Diskette ins Laufwerk A eingelegt und der Rechner wieder gebootet. Diese Diskette enthält wiederum eine Programmroutine, durch welche der Umschaltvorgang zurückgesetzt wird (Herstellen der "alten" Konfiguration). Sodann wird beispielsweise durch einen weiteren Programmcode auf dieser Diskette ein Rückübertragen der Daten der Festplatte des Laufwerks C2 auf die Festplatte des Laufwerkes C1 ausgelöst. Da in der Zwischenzeit ausschließlich mit der Festplatte des Laufwerkes C2 gearbeitet wurde, enthält nun die Festplatte des Laufwerkes C1 die vollständigen und auch aktuellsten Daten. Nach dieser Wiederherstellung kann die Diskette aus dem Laufwerk A herausgenommen werden.

Als Ausgestaltung der Erfindung kann vorgesehen sein, daß in derjenigen Zeit, in welcher der Rechner ausschließlich mit dem Laufwerk C2 zu betreiben ist, bei jedem Einschalten, also jedem Bootvorgang, eine Diskette gemäß der Erfindung ins Laufwerk A einzulegen ist. Da bei jedem Booten zunächst ein Zugriff auf das Laufwerk A erfolgt, kann durch eine bestimmte Programmdatei dem Betriebssystem des Rechners mitgeteilt werden, daß des weiteren die Festplatte im Laufwerk C2 das aktuelle Laufwerk ist.

Vorteilhafterweise geschieht das Umschalten mittels der erläuterten Diskette dauerhaft, d.h. auch bei weiteren Ein- und Ausschaltvorgängen, also bei jedem Bootvorgang des Rechners, greift dieser auch ohne daß diese Diskette ins Laufwerk A eingelegt ist zum Booten nur noch auf die Festplatte des Laufwerkes C2 zu. Dazu wird zweckmäßigerweise die Konfiguration (der entsprechende Eintrag) beim Booten von Disketten geändert, der in einem im PC vorhandenen, batteriegepufferten RAU nicht flächig aber änderbar abgelegt ist.

Nach einer Störung der Festplatte im Laufwerk C1 und nach deren Herausnahme arbeitet der Rechner bis zum Wiedereinsetzen eines neuen Festplattenlaufwerkes lediglich mit dem Festplattenlaufwerk C2. Während dieser Zeit des "Reservebetriebs", die entsprechend kurz gehalten werden kann, werden höchstwahrscheinlich keine Fehler im Laufwerk C2 auftreten. Selbstverständlich enthalten sämtliche Programme und insbesondere die menügeführte Benutzeroberfläche bei einem vom Laufwerk C2 aus gebooteten Rechner keinerlei Aufforderung an den Benutzer des Leitstandes bzw. keinerlei Kopierbefehle um Sicherungskopien bzw. Backups zu erstellen.

Der erfindungsgemäße Rechner mit zwei Festplattenlaufwerken und einem durch je eine Kassette auszulösenden Umschalter besitzt zwar nicht die volle Leistungsfähigkeit eines Rechners mit zwei Festplatten im Spiegelplattenbetrieb, jedoch sind die Kosten eines erfindungsgemäßen Rechners lediglich durch die Mehrkosten eines weiteren Festplattenlaufwerkes bedingt. Eine sehr teure "Spiegelplattensoftware" ist somit entbehrlich, ohne daß der Rechner bei Ausfall eines Festplattenlaufwerkes nicht mehr lauffähig ist.

## Patentansprüche

1. Rechner für den Leitstand einer Maschine, insbesondere einer Druckmaschine, mit einem Diskettenlaufwerk und einem ersten Festplattenlaufwerk, bei dem bei Inbetriebnahme des Rechners (Booten) durch ein im ROM des Rechners abgelegtes Programmteil zunächst ein Zugriff auf das Diskettenlaufwerk und sodann ein Zugriff auf ein erstes Festplattenlaufwerk zum Starten des Betriebssystems sowie den auf der Festplatte des ersten Festplattenlaufwerkes gespeicherten Programmteilen einer menügeführten Benutzeroberfläche erfolgt,
**dadurch gekennzeichnet**,
daß der Rechner neben dem ersten Festplattenlaufwerk (C1) ein zweites Festplattenlaufwerk (C2) aufweist, wobei im Normalbetrieb durch das im ROM des Rechners befindliche BIOS zum Speichern und Abrufen von Daten lediglich Zugriffe auf das erste Festplattenlaufwerk (C1) durchgeführt werden und in bestimmten und vorgebbaren Zeitabständen Sicherungskopien der von auf dem ersten Festplattenlaufwerk (C1) befindlichen Daten auf das Festplattenlaufwerk (C2) abspeicherbar sind, und daß nach einem Ausfall des ersten Festplattenlaufwerkes (C1) durch einen Startvorgang des Rechners (Booten) mit einer in das Diskettenlaufwerk eingelegten Diskette, welche eine durch das im ROM des Rechners abgelegte BIOS lesbare Information aufweist sämtliche weiteren Zugriffe zum Speichern und Abrufen von Daten von dem ersten Festplattenlaufwerk (C1) auf das zweite Festplattenlaufwerk (C2) umsteuerbar sind.

2. Rechner nach Anspruch 1,
**dadurch gekennzeichnet**,
daß bei Wiederherstellung des ersten Festplattenlaufwerkes (C1) bzw. bei Installation eines neuen Festplattenlaufwerkes (C1) durch Inbetriebnahme des Rechners mit einer in das Diskettenlaufwerk eingelegten Diskette mit einer darauf gespeicherten und durch das im ROM des Rechners abgelegten BIOS die Daten vom zweiten Festplattenlaufwerk (C2) auf das erste Festplattenlaufwerk (C1) übertragbar sind und daraufhin der Rechner ausschließlich mit dem ersten Festplattenlaufwerk (C1) von der menügeführten Benutzeroberfläche betreibbar ist.

3. Rechner nach Anspruch 1 oder 2,
**dadurch gekennzeichnet**,
daß im Normalbetrieb das Kopieren von Daten von dem ersten Festplattenlaufwerk (C1) auf das zweite Festplattenlaufwerk (C2) durch den Benutzer über die menügeführte Benutzeroberfläche auslösbar ist.

4. Rechner nach Anspruch 1 oder 2,
**dadurch gekennzeichnet**,
daß das Kopieren von Daten und Programmteilen während des Normalbetriebes des Rechners von dem ersten Festplattenlaufwerk (C1) auf das zweite Festplattenlaufwerk (C2) entsprechend einem vorgegebenen Zeittakt durch ein im Rechner gespeichertes Programm selbsttätig ausgelöst wird.

## Claims

1. Computer for the control station of a machine, particularly a printing press, with a diskette drive and a first hard disc drive in which on putting the computer into action (booting) by means of a programme portion stored in ROM of the computer, first enquiry on the diskette drive and then enquiry on a first hard disc drive to start the operating system as well as the programme parts stored on the hard disc of the first hard disc drive of a menu-led user interface takes place, characterised in that the computer has as well as the first hard disc drive (C1) a second hard disc drive (C2), wherein in normal operation by means of the BIOS for storing and retrieving data located in the ROM of the computer only access to the first hard disc drive (C1) is carried out and at given and predetermined periods of time, security copies of the data located on the first hard disc drive (C1) are storable on the hard disc drive (C2), and that after failure of the first hard disc drive (C1), via a start process of the computer (booting) with a diskette inserted into the diskette drive, which has information readable by means of the BIOS stored in the ROM of the computer all further access for storing and interrogating data are changeable over from the first hard disc drive (C1) to the second hard disc drive (C2).

2. Computer according to Claim 1, characterised in that on repair of the first hard disc drive (C1) or on installation of a new hard disc drive (C1) by putting the computer into operation with a diskette inserted into the diskette drive with data stored thereon and by the BIOS stored in the ROM of the computer, the data are transferable from the second hard disc drive (C2) on to the first hard disc drive (C1) and thereafter the computer is exclusively operable with the first hard disc drive C1 from the menu led user interface.

3. Computer according to Claim 1 or 2, characterised in that in normal operation, the copying of data from the first hard disc drive (C1) on to the second hard disc drive (C2) can be triggered by the user via the menu led user interface.

4. Computer according to Claim 1 or 2, characterised in that the copying of data and programme parts during normal operation of the computer from the first hard disc drive (C1) on to the second hard disc drive (C2) is triggered automatically corresponding to a predetermined timer by a programme stored in the computer.

## Revendications

1. Calculateur pour le poste de contrôle d'une machine, en particulier une machine d'impression, comportant un lecteur de disquette et un premier lecteur de disque dur, dans lequel lors de la mise en service du calculateur (Booten), par une partie de programme enregistrée dans la mémoire morte du calculateur, on réalise tout d'abord un accès au lecteur de disquette et ensuite un accès au premier lecteur de disque dur, pour faire débuter le système de fonctionnement, ainsi que les parties de programme d'une surface d'opérateur guidée par le menu, enregistrées sur le disque dur du premier lecteur de disque dur,
caractérisé en ce que le calculateur comporte, en plus du premier lecteur de disque dur (C1), un second lecteur de disque dur (C2), en fonctionnement normal des accès étant uniquement réalisés au premier lecteur de disque dur (C1) par le BIOS situé dans la mémoire morte du calculateur pour stocker et interroger des données, et dans des durées déterminées et pouvant être prédéfinies, des copies de sécurité des données situées sur le premier lecteur de disque dur (C1) pouvant être enregistrées sur le lecteur de disque dur (C2), et en ce qu'après une panne du premier lecteur de disque dur (C1), par un processus de départ du calculateur (Booten) avec une disquette introduite dans le lecteur de disquette et présentant une information pouvant être lue par le BIOS introduit dans la mémoire morte du calculateur, tous les autres accès pour stocker et interroger des données peuvent être commutés du premier lecteur de disque dur (C1) sur le second lecteur de disque dur (C2).

2. Calculateur selon la revendication 1,
caractérisé en ce qu'après la réparation du premier lecteur de disque dur (C1) ou après l'installation d'un nouveau lecteur de disque dur (C1), par la mise en service du calculateur avec une disquette introduite dans le lecteur de disquette, et par le BIOS introduit dans la mémoire morte du calculateur, les données peuvent être transmises du second lecteur de disque dur (C2) au premier lecteur de disque dur (C1), et ensuite le calculateur est commandé exclusivement par le premier lecteur de disque dur (C1) de la surface d'opérateur guidée par le menu.

3. Calculateur selon l'une des revendications 1 ou 2,
caractérisé en ce qu'en fonctionnement normal, le copiage de données du premier lecteur de disque dur (C1) sur le second lecteur de disque dur (C2) peut être déclenché par l'opérateur, par l'intermédiaire de la surface d'opérateur guidée par le menu.

4. Calculateur selon l'une des revendications 1 ou 2,
caractérisé en ce que le copiage de données et de parties de programmes, lors du fonctionnement normal du calculateur, du premier lecteur de disque dur (C1) sur le second lecteur de disque dur (C2), peut être déclenché automatiquement, en correspondance à une cadence prédéfinie, par un programme stocké dans le calculateur.
